# EUROPÄISCHE PATENTSCHRIFT

(11) **EP 3 489 072 B1**
(45) Veröffentlichungstag und Bekanntmachung des Hinweises auf die Patenterteilung: **19.01.2022**
(21) Anmeldenummer: 17203506.5
(22) Anmeldetag: 24.11.2017
(51) Int. Cl.: B60L 13/03, B65G 54/02

(54) **TRANSPORTSTRECKE EINES LANGSTATORLINEARMOTORS**
TRANSPORT ROUTE OF A LONG STATOR LINEAR MOTOR
TRAJET DE TRANSPORT D'UN MOTEUR LINÉAIRE À STATOR LONG

(43) Veröffentlichungstag der Anmeldung: 29.05.2019
(73) Patentinhaber: B&R Industrial Automation GmbH, 5142 Eggelsberg (AT)
(72) Erfinder: Walter, Dominic, 5020 Salzburg (AT); Obermair, Christoph, 5020 Salzburg (AT); Huber, Stefan, 5020 Salzburg (AT)
(74) Vertreter: Patentanwälte Pinter & Weiss OG

(56) Entgegenhaltungen:
- EP-A1- 3 202 611
- EP-A1- 3 243 772
- US-A1- 2011 125 307

## Beschreibung

Die gegenständliche Erfindung betrifft eine Transportstrecke eines Langstatorlinearmotors entlang der eine Transporteinheit des Langstatorlinearmotors in Längsrichtung bewegbar ist, wobei die Transportstrecke durch zumindest zwei Transportstreckenbaugruppen ausgebildet ist, die in Längsrichtung nebeneinander angeordnet sind, wobei jede der zumindest zwei Transportstreckenbaugruppen eine Führungsseite an einer in einer quer zu Längsrichtung ausgerichteten Querrichtung liegenden Seite der Transportstreckenbaugruppe ausbildet und die Transporteinheit an der Führungsseite geführt gelagert und in Längsrichtung bewegbar angeordnet ist, und wobei die Transportstrecke mit einem zweiseitigen Streckenabschnitt mit Transportstreckenbaugruppen an beiden Seiten ausgebildet und in einem zweiseitigen Streckenabschnitt die Führungsseiten von Transportstreckenbaugruppen an den beiden Seiten einander zugewandt angeordnet sind, und wobei die zumindest zwei Transportstreckenbaugruppen an der jeweiligen Führungsseite jeweils einen Anfangspunkt und einen Endpunkt aufweist, der jeweils auf einem Rastereckpunkt eines (a x a)-Rasters liegt, und in einem zweiseitigen Streckenabschnitt in Querrichtung zwischen zwei Transportstreckenbaugruppen ein Zwischenraum vorgesehen ist und die Transporteinheit zumindest teilweise in diesem Zwischenraum angeordnet ist.

Langstatorlinearmotoren werden oftmals als flexible Fördereinrichtungen in Herstellungs-, Bearbeitungs-, Montageanlagen, und ähnlichen Anlagen, verwendet. Ein Langstatorlinearmotor besteht bekanntermaßen im Wesentlichen aus einem Langstator in Form einer Vielzahl hintereinander angeordneter Antriebsspulen, die an einer ortsfesten Konstruktion angeordnet sind, und einer Vielzahl von Transporteinheiten mit Erregungsmagneten (Permanent- oder Elektromagnete), die entlang des Langstators bewegt werden. Dazu werden die Antriebsspulen durch das Anlegen einer elektrischen Spannung mit einem elektrischen Strom beaufschlagt. Durch ein geeignetes Bestromen der Antriebsspulen wird ein in Längsrichtung entlang des Langstators bewegtes Magnetfeld erzeugt, das mit den Erregungsmagneten an einer Transporteinheit zusammenwirkt, um die Transporteinheit gemäß dem bekannten Motorprinzip zu bewegen. Durch den Langstator wird somit eine Transportstrecke ausgebildet, entlang der die Transporteinheiten bewegt werden können. Damit ist es möglich jede Transporteinheit einzeln und unabhängig voneinander zu bewegen (Position, Geschwindigkeit, Beschleunigung, Bewegungsrichtung). Dazu wird jede Antriebsspule durch einen zugeordneten Antriebsspulenregler angesteuert, der Vorgaben zur Bewegung einer Transporteinheit (z.B. in Form von Sollwerten für Position oder Geschwindigkeit) von einer übergeordneten Anlagensteuereinheit erhalten kann und der Stellgrößen für die Antriebsspulen, insbesondere Spulenströme, berechnet. Dabei können entlang der Transportstrecke auch Weichen des Langstatorlinearmotors vorgesehen sein, an denen eine Aufteilung auf verschiedene Transportstrecken oder eine Zusammenführung von verschiedenen Transportstrecken erfolgt. Eine Fördereinrichtung in Form eines Langstatorlinearmotors kann daher durchaus komplexe Bahnführungen aufweisen.

Oftmals ist der Langstator bzw. eine Transportstrecke auch in Form von einzelnen, zusammengefügten Transportstreckenbaugruppen aufgebaut, wobei die Transportstreckenbaugruppen in Bewegungsrichtung nebeneinander angeordnet sind. Durch diese Modularität kann ein Langstatorlinearmotor einfacher aufgebaut werden, insbesondere wenn definierte Transportstreckenbaugruppen verwendet werden. Die konstruktive Ausgestaltung des Langstatorlinearmotors, also z.B. die Ausführung der Antriebsspulen, der Förderstrecke, der Transporteinheiten, der Führungen der Transporteinheit, usw., kann natürlich verschieden sein, wobei das grundlegende Funktionsprinzip eines Langstatorlinearmotors aber gleich bleibt. Die Wahl und Geometrie der Transportstreckenbaugruppen ist dabei aber keinesfalls trivial. Grundsätzlich will man mit möglichst wenigen Transportstreckenbaugruppen flexibel verschiedenste Transportstrecken realisieren können.

Zudem kann eine Transportstrecke auch einseitige Streckenabschnitte mit Transportstreckenbaugruppen an nur einer Seite aufweisen und/oder zweiseitige Streckenabschnitte mit Transportstreckenbaugruppen an beiden Seiten aufweisen. Das ist beispielsweise aus der US 2015/0083018 A1 oder der EP 202 611 A1 bekannt. Solche zweiseitigen Streckenabschnitte kommen beispielsweise vor, wenn entlang einer gewissen Strecke hohe Vortriebskräfte benötigt werden, oder aber auch, wenn die Transportstrecke mehrere Transportpfade (auch in sich geschlossene) aufweist, die an einem zweiseitigen Streckenabschnitt nebeneinander liegen. Auch im Bereich einer Weiche können zweiseitige Streckenabschnitte vorkommen. Dadurch wird aber die mögliche Komplexität der Transportstrecke eines Langstatorlinearmotors noch weiter erhöht, was den Wunsch nach einer einfachen aber flexiblen Realisierung weiter erhöht.

Die EP 3 243 772 A1 beschreibt Transportstreckenbaugruppen deren Anfangs- und Endpunkte an einem (a x a)-Raster ausgerichtet sind. Damit lässt sich die Planung einer Transportstrecke vereinfachen. Die Planung komplexerer Transportstrecken mit mehreren Transportpfaden und gegebenenfalls mit mehreren geschlossen Teilstrecken lässt sich damit aber nur bedingt vereinfachen. Insbesondere eine spätere Erweiterung oder Änderung einer damit geplanten Transportstrecke kann aufwendig werden.

Es ist daher eine Aufgabe der gegenständlichen Erfindung eine Transportstrecke eines Langstatorlinearmotors mit Transportstreckenbaugruppen anzugeben, die auf flexible und einfache Weise eine Erweiterbarkeit ermöglicht, um verschiedenste Transportstrecken unterschiedlichster Komplexität realisieren zu können.

Diese Aufgabe wird dadurch gelöst, dass sich in Querrichtung in der Mitte dieses Zwischenraumes ein Bewegungspfad ausbildet, dem die Transporteinheit bei Bewegung in Längsrichtung durch die Führung an den Transportstreckenbaugruppen folgt und der Bewegungspfad durch die Anordnung der Transportstreckenbaugruppen in Querrichtung in einem Abstand von (r·a) vom Anfangspunkt oder Endpunkt entfernt angeordnet ist, wobei r eine ungerade, ganze Zahl ist. Mit dieser Anordnung kann sichergestellt werden, dass sich der Bewegungspfad der Transportstrecke an einem festen Raster ausrichten lässt und auch die Transportstreckenbaugruppen in dieses Raster passen. Damit kann die Transportstrecke im Raster einfach um weitere solche Transportstreckenbaugruppen erweitert werden. Das Raster gewährleistet zudem auch, dass sich mit den Transportstreckenbaugruppen auch immer ein geschlossener Transportpfad realisieren lässt, sofern nur solche Transportstreckenbaugruppen verwendet werden. Auch das vereinfacht die Planung einer Transportstrecke erheblich.

Vorteilhafterweise sind an den Transportstreckenbaugruppen in Längsrichtung eine Mehrzahl von Antriebsspulen nebeneinander angeordnet, wobei die Einbaubreite einer Antriebsspule in Längsrichtung der Rasterlänge a entspricht. Damit können die Transportstreckenbaugruppen in Längsrichtung einfach aneinander gereiht werden.

Mit diesem Schema lassen sich insbesondere eine gerade Transportstreckenbaugruppe, eine Transportstreckenbaugruppe als 90°-Bogen und eine Transportstreckenbaugruppe als 180°-Bogen, jeweils mit außenliegender oder innenliegender Führungsseite, realisieren. Mit diesen Transportstreckenbaugruppen kann fast jeder Transportpfad realisiert werden.

Die gegenständliche Erfindung wird nachfolgend unter Bezugnahme auf die Figuren 1 bis 9 näher erläutert, die beispielhaft, schematisch und nicht einschränkend vorteilhafte Ausgestaltungen der Erfindung zeigen. Dabei zeigt
Fig.1 eine einfache Transportstrecke eines Langstatorlinearmotors,
Fig.2 eine komplexere Transportstrecke eines Langstatorlinearmotors,
Fig.3 eine erfindungsgemäße Transportstrecke eines Langstatorlinearmotors im festgelegten Raster mit einseitigen und zweiseitigen Streckenabschnitten,
Fig.4 einen Querschnitt durch die Transportstrecke eines zweiseitigen Streckenabschnittes,
Fig.5 einen Querschnitt durch die Transportstrecke eines einseitigen Streckenabschnittes,
Fig.6 eine 90° Transportstreckenbaugruppe mit außenliegender Führungsseite,
Fig.7 eine 180° Transportstreckenbaugruppe mit außenliegender Führungsseite,
Fig.8 eine gerade Transportstreckenbaugruppe und
Fig.9 eine 90° Transportstreckenbaugruppe mit innenliegender Führungsseite.

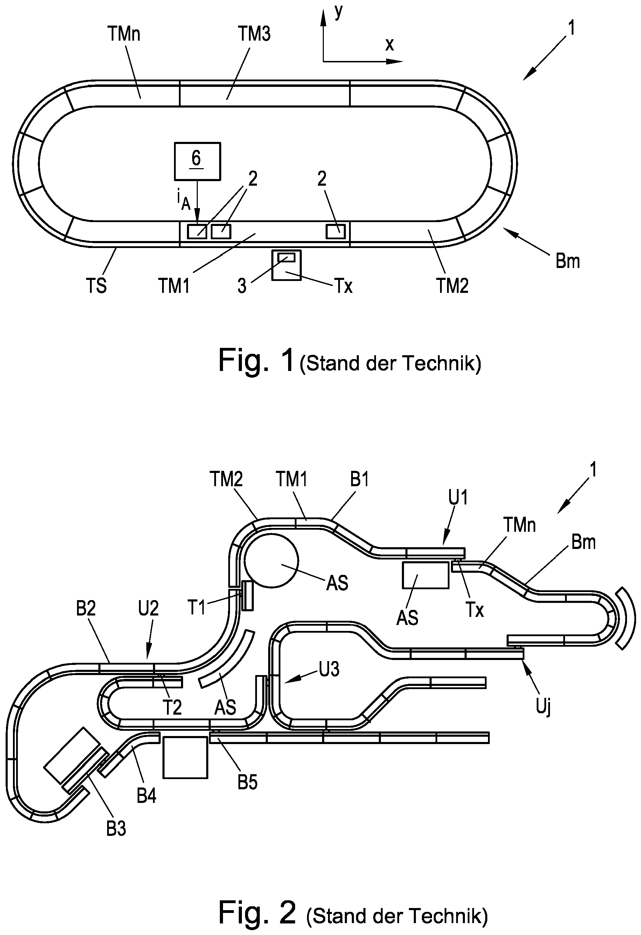

Ein einfaches Beispiel eines Langstatorlinearmotors 1 ist in Fig.1 dargestellt. Der Langstatorlinearmotor 1 ist dabei mit einem Transportpfad Bm in Form einer geschlossenen Transportstrecke TS ausgeführt. Die Transportstrecke TS wird gebildet aus einer Anzahl n>1 von Transportstreckenbaugruppen TMn, die in Längsrichtung x ortsfest nebeneinander angeordnet werden. Die Längsrichtung x entspricht dabei der Bewegungsrichtung einer Transporteinheit Tx entlang der Transportstrecke TS. An einer Krümmung ist die Längsrichtung x folglich die Tangente an den Transportpfad Bm. Die Richtung quer zur Längsrichtung x wird als Querrichtung y bezeichnet.

Die Transporteinheit Tx ist an der Transportstrecke TS, bzw. an den einzelnen Transportstreckenbaugruppe TMn, geführt gelagert und in Längsrichtung x bewegbar angeordnet. Eine Transporteinheit Tx kann sich in Querrichtung y aufgrund der Führung üblicherweise nicht bewegen. Es liegt somit vorzugsweise eine Zwangsführung in Längsrichtung x vor.

Auf einer Transportstreckenbaugruppe TMn sind vorzugsweise in Längsrichtung x nebeneinander eine Vielzahl von Antriebsspulen 2 (in Fig.1 sind nur einige Antriebsspulen 2 angedeutet) angeordnet, die unter Kontrolle einer Regelungseinheit 6 (nur für eine Antriebsspule 7 dargestellt) durch Anlegen einer Spulenspannung mit einem Spulenstrom i_{A} bestromt werden, um ein bewegtes Magnetfeld zu erzeugen. Entlang der Transportstrecke TS wird auf diese Weise zumindest eine Transporteinheit Tx bewegt. Die Antriebsspulen 2 können aber auch in anderer geeigneten Weise ortsfest angeordnet sein. Die Transporteinheit Tx ist dazu auf geeignete Weise an der stationär angeordneten Transportstrecke TS geführt. Außerdem ist an der Transporteinheit Tx zumindest ein Erregungsmagnet 3, vorzugsweise ein Permanentmagnet oder eine Anordnung von Permanentmagneten, angeordnet, der mit dem erzeugten, bewegten Magnetfeld zur Bewegung der Transporteinheit Tx entlang der Transportstrecke TS zusammenwirkt. Selbstverständlich können entlang der Transportstrecke TS auch mehr als eine Transporteinheit Tx bewegt werden, wobei jede Transporteinheit Tx durch entsprechendes Bestromen der Antriebsspulen 2 im Bereich der Transporteinheit Tx unabhängig von den anderen Transporteinheiten Tx bewegt (in Richtung, Position, Geschwindigkeit und Beschleunigung) werden kann. Dieses Funktionsprinzip eines Langstatorlinearmotors 1 ist hinlänglich bekannt, sodass hier nicht weiter darauf eingegangen wird.

Es kann natürlich auch entlang der Transportstrecke TS auch Bereiche geben, an denen an beiden Seiten einer Transporteinheit Tx (in Bewegungsrichtung gesehen) eine Transportstreckenbaugruppe TMn, eventuell mit Antriebsspulen 2, vorgesehen sind, wie in Fig.2 angedeutet. In diesem Fall hat auch die Transporteinheit Tx in Querrichtung y gesehen vorzugsweise an beiden Seiten zumindest einen Erregungsmagnet 3.

In Fig.2 ist ein komplexer aufgebauter Langstatorlinearmotor 1 dargestellt, wobei aus Gründen der Übersichtlichkeit auf die Darstellung der Antriebsspulen 2 und der Erregungsmagnete 3 verzichtet wird. Hierbei umfasst die Transportstrecke TS mehrere Transportpfade Bm, m>1 (aus Übersichtsgründen wurden nicht alle Transportpfade bezeichnet), die gemeinsam die Transportstrecke TS des Langstatorlinearmotors 1 ausbilden. Die Transportstrecke TS, bzw. ein Transportpfad Bm davon, wird dabei wiederum aus verschiedenen Transportstreckenbaugruppen TMn gebildet. Eine Transporteinheit Tx, x≥1 kann entlang der Transportstrecke TS auf den verschiedenen Transportpfaden Bm bewegt werden. Die einzelnen Transportpfade Bm sind durch Übergabestellen Uj, j>1 (auch hier sind nicht alle Übergabestellen Uj bezeichnet), an denen sich die Transportpfade Bm in Längsrichtung x teilweise überlappen, miteinander verbunden. Eine Übergabestelle Uj kann als Weiche ausgeführt sein, wie beispielsweise die Übergabestellen U2, U3, kann aber auch als einfacher Wechsel von einem Transportpfad Bm auf einen anderen Transportpfad Bm in einem zweiseitigen Streckenabschnitt ausgeführt sein, wie beispielsweise die Übergabestellen U1, Uj. Bei einer Weiche gibt es eine Aufteilung auf verschiedene Transportpfade Bm oder eine Zusammenführung von verschiedenen Transportpfaden Bm.

Entlang der Transportpfade Bm können auch verschiedene Arbeitsstationen AS angeordnet sein, an denen eine Transporteinheit Tx durchbewegt oder auch angehalten werden kann. In den Arbeitsstationen AS können an Bauteilen, die mit einer Transporteinheit Tx bewegt werden, irgendwelche Manipulationen durchgeführt werden oder es können Bauteile geladen oder entladen werden. Eine Arbeitsstation AS kann dabei auch zum Einschleusen oder Ausschleusen von Transporteinheiten Tx in eine Transportstrecke TS ausgeführt sein.

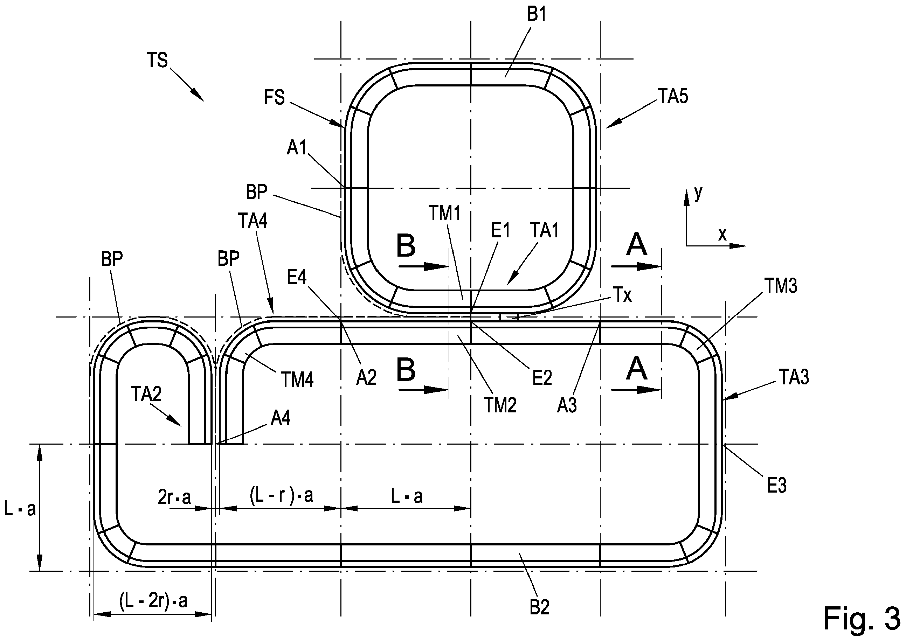

Um eine Transportstrecke TS eines Langstatorlinearmotors 1 einfach aber trotzdem flexibel aufbauen zu können sind die Geometrie und die Anordnung der Transportstreckenbaugruppen TMn nach einem festen Schema festgelegt, wie anhand der Fig.3 erläutert wird.

Die Transportstrecke TS nach Fig.3 umfasst zwei Transportpfade B1, B2. Die beiden Bewegungspfade B1, B2 sind in einem zweiseitigen Streckenabschnitt TA1 in Querrichtung y gesehen nebeneinander angeordnet, sodass Transportstreckenbaugruppen TMn beider Transportpfade B1, B2 nebeneinander angeordnet sind. Ebenso umfasst der zweite Transportpfad B2 einen Streckenabschnitt TA2, entlang dem Transportstreckenbaugruppen TMn des zweiten Transportpfades B2 in Querrichtung y nebeneinander angeordnet sind. Daneben umfasst die Transportstrecke TS auch einseitige Transportabschnitte TA3, TA4, TA5, entlang denen nur an einer Seite (in Querrichtung y gesehen) Transportstreckenbaugruppen TMn angeordnet sind.

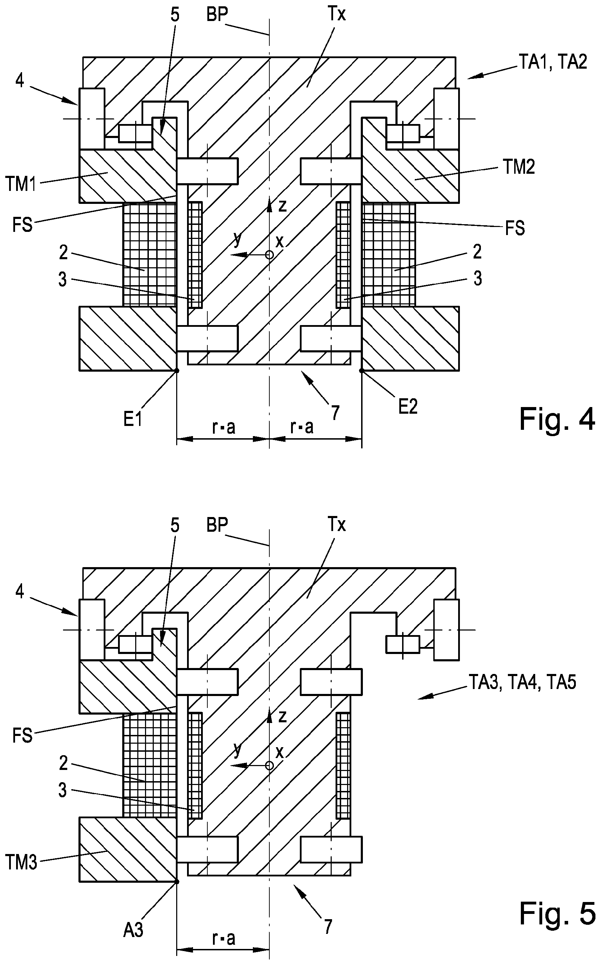

Die Fig.4 zeigt einen Querschnitt (Schnitt B-B) durch einen zweiseitigen Streckenabschnitt TA1, TA2 und die Fig.5 einen Querschnitt (Schnitt A-A) durch einen einseitigen Streckenabschnitt TA3, um diesen Unterschied zu verdeutlichen. In einem zweiseitigen Streckenabschnitt TA1, TA2 sind in Querrichtung y an beiden Seiten Transportstreckenbaugruppen TM1, TM2 angeordnet. In einem einseitigen Streckenabschnitt TA3, TA4, TA5 hingegen nur an einer Seite. In Fig.4 und 5 sind auch Führungselemente 4, 5 an der Transporteinheit Tx und an den Transportstreckenbaugruppen TMn angedeutet, die zusammenwirken, um die Transporteinheit Tx an den Transportstreckenbaugruppe TMn zu halten und in Längsrichtung x zu führen. Führungselemente 4, 5 können beliebig ausgeführt sein, beispielsweise als Rollen, Räder, Gleitflächen, magnetische Führungen, usw.

In Querrichtung y entsteht in einem zweitseitigen Streckenabschnitt TA1, TA2 zwischen den nebeneinander angeordneten Transportstreckenbaugruppe TM1, TM2 ein Zwischenraum 6, in dem die Transporteinheit Tx zumindest teilweise angeordnet ist. In der Mitte dieses Zwischenraumes 6 (in Querrichtung y gesehen) wird ein Bewegungspfad BP ausgebildet, dem die Transporteinheit Tx bei Bewegung in Längsrichtung x entlang des Transportpfades Bm durch die Führung an den Transportstreckenbaugruppen TMn folgt. Der Bewegungspfad BP ist in Fig.3 teilweise durch eine strichlierte Linie angedeutet. Durch die vorgegebene Führung der Transporteinheit Tx an den Transportstreckenbaugruppen TMn wird der Bewegungspfad BP entlang der Transportstrecke TS immer im konstanten Abstand von der Transportstreckenbaugruppe TMn ausgebildet.

Jede Transportstreckenbaugruppe TMn hat an einer Seite (in Querrichtung y gesehen) eine Führungsseite FS, die in den Figuren durch eine Doppellinie angedeutet ist. Die Transporteinheit Tx wird entlang der Führungsseite FS geführt. In einem zweiseitigen Streckenabschnitt TA1, TA2 sind die Führungsseiten FS der nebeneinander angeordneten Transportstreckenbaugruppe TM1, TM2 einander zugewandt angeordnet.

Jede Transportstreckenbaugruppe TMn hat an der Führungsseite FS in Längsrichtung x gesehen einen Anfangspunkt An und einen Endpunkt En. Die Transportstreckenbaugruppen TMn werden derart zur Transportstrecke TSm verbunden, dass jeweils ein Anfangspunkt An und ein Endpunkt En benachbarter Transportstreckenbaugruppen TMn zusammenfallen. Die Anfangspunkte An und Endpunkte En sind auf einer Transportstreckenbaugruppe TMn natürlich austauschbar.

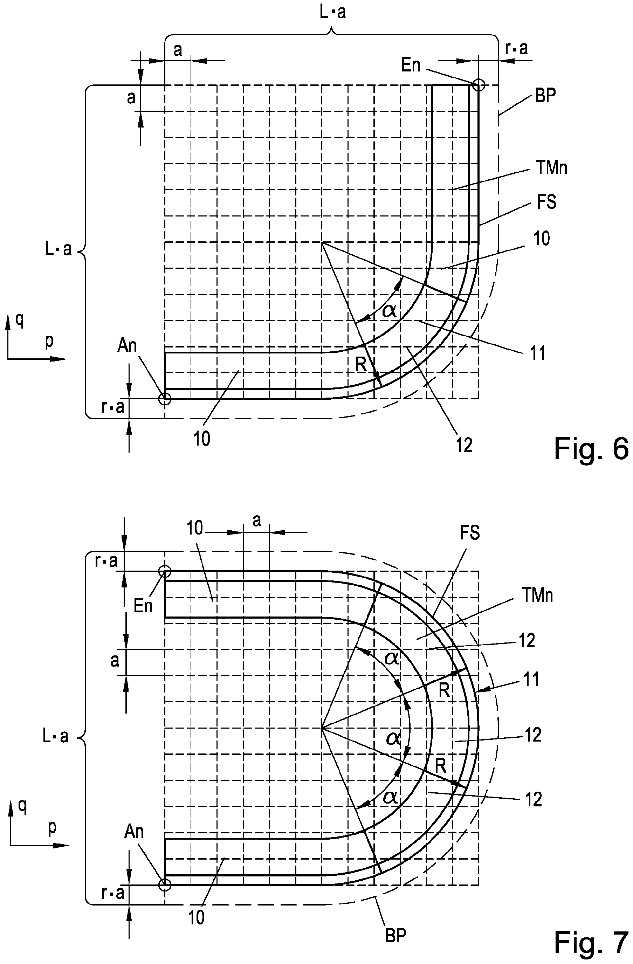

Die Transportstreckenbaugruppen TMn können dabei beliebige Bewegungspfade BP ausbilden, beispielsweise eine Gerade, einen 90°-Bogen (Fig.6) oder einen 180°-Bogen (Fig.7), oder S-förmige Kurven. Entscheidend dabei ist, dass jeder Anfangspunkt An und Endpunkt En einer Transportstreckenbaugruppe TMn auf einem Rastereckpunkt (p·a) × (q·a) eines (a x a)-Rasters liegt, wobei p, q ganze Zahlen sind und die Rasterlänge a vorgegeben ist. Dabei ist ein Rastereckpunkt als Ursprung festzulegen, von dem weg das Raster aufgebaut wird. Dabei wird der Ursprung vorzugsweise der Einfachheit halber (aber nicht zwingendermaßen) so gewählt, dass p, q für verschiedene Rastereckpunkte (p·a) × (q·a) nicht das Vorzeichen wechseln müssen. Im Falle des 90°-Bogens der Fig.6 liegt der Anfangspunkt An der Transportstreckenbaugruppe TMn beispielsweise auf dem Rastereckpunkt mit p=q=0 (gewählter Ursprung) und der Endpunkt En auf dem Rastereckpunkt mit p=q=12. Wäre der Ursprung beispielsweise am Endpunkt En, dann läge der Anfangspunkt An der Transportstreckenbaugruppe TMn nach Fig.6 beispielsweise auf dem Rastereckpunkt mit p=q=-12. Allgemein gilt für den Anfangspunkt An oder Endpunkt En (bei Wahl des Ursprungs bei p=q=0) eines 90°-Bogens p,q≠0. Wird der Ursprung bei p=q=0 festgelegt, dann liegt der anderen Punkt eines 90°-Bogens beispielsweise bei p=q. Im Falle der Fig.7 liegt der Anfangspunkt An der Transportstreckenbaugruppe TMn beispielsweise auf dem Rastereckpunkt mit p=q=0 (gewählter Ursprung) und der Endpunkt En auf dem Rastereckpunkt mit p=0, q=12. Der 180°-Bogen der Fig.7 könnte beispielsweise aber natürlich auch so definiert sein, dass der Anfangspunkt An und der Endpunkt En auf einer unterschiedlichen p-Koordinate liegen. Allgemein gilt für den Anfangspunkt An oder Endpunkt En eines 180°-Bogens (bei Wahl des Ursprungs bei p=q=0), dass p eine ganze Zahl ist und q≠0.

Eine gekrümmte Transportstreckenbaugruppe TMn kann auch aus zwei Kurveneingangsmodulen 10, auf denen der Anfangspunkt An oder der Endpunkt En vorgesehen ist, und zumindest einem Verbindungsmodul 11, das die beiden Kurveneingangsmodule 10 verbindet, ausgebildet sein, wie in Fig.6 und 7 dargestellt. Das hat den Vorteil, dass man aus den Kurveneingangsmodulen 10 mit verschiedenen Verbindungsmodulen 11 auch verschiedene Transportstreckenbaugruppen TMn erzeugen kann. Dazu kann das Verbindungsmodul 11 selbst auch noch unterteilt sein, beispielsweise in Form mehrerer Kreissegmentmodule 12, wie in Fig.7 dargestellt.

Ein Kreissegmentmodul 12 in Form eines Kreisbogens spannt beispielsweise einen Winkel α=45° auf. Wenn nun das Kurveneingangsmodul 10 eine Winkeländerung der Transportstrecke (in Bewegungsrichtung gesehen) von 22.5° realisiert, dann kann mit solchen Kurveneingangsmodulen 10 und Kreissegmentmodulen 12 mit Bogenwinkel α=45° sowohl ein 90°-Bogen (Fig.6), als auch ein 180°-Bogen (Fig.7) realisiert werden. Ein Verbindungsmodul 11 bestehend aus drei Kreissegmentmodulen 12, das mit zwei Kurveneingangsmodulen 10 verbunden ist, ergibt dann einen 180°-Bogen. Ein Verbindungsmodul 11 bestehend aus einem Kreissegmentmodul 12 und zwei damit verbundenen Kurveneingangsmodulen 10 ergibt dann einen 90°-Bogen. Selbstverständlich sind auch andere Aufteilungen denkbar. Beispielsweise könnte ein 90°-winkeliges oder 135°-winkeliges Kreissegmentmodul 12 vorgesehen sein.

Hierbei ist es besonders vorteilhaft, wenn ein Kurveneingangsmodul 10 eine Winkeländerung realisiert, um eine Kurve von einem Krümmungsradius von unendlich (Krümmung Null) an einem Ende des Kurveneingangsmoduls 10 auf einen Krümmungsradius R (Krümmung 1/R) am anderen Ende des Kurveneingangsmoduls 10 zu verwirklichen. Dabei kann vorgesehen sein, dass die Krümmung möglichst stetig von Null auf 1/R erhöht wird, beispielsweise indem eine Kurve in Form eines Splines (z.B. ein Polynom 5.Ordnung) realisiert wird. Würde sich die Krümmung sprunghaft ändern, so würde das für eine Transporteinheit Tx, die entlang einer Transportstreckenbaugruppe TMn mit einem Kurveneingangsmodul 10 bewegt wird, einen Sprung in der Zentrifugalbeschleunigung bedeuten. Das würde die Mechanik der Transporteinheit Tx und/oder der Führung der Transportstrecke TS belasten und den Verschleiß erhöhen. Unter diesem Gesichtspunkt ist es auch vorteilhaft, wenn die Krümmung an einem Ende des Kurveneingangsmoduls 10 und die Krümmung an einem Ende des Verbindungsmoduls 11, bzw. eines Kreissegmentmoduls 12, gleich sind, da es auch dann zu keinem Sprung in der Krümmung der Transportstreckenbaugruppe TMn kommt, wenn das Kurveneingangsmodul 10 und das Verbindungsmoduls 11, bzw. das Kreissegmentmoduls 12, kombiniert werden. Nachdem das Kreissegmentmodul 12 vorzugsweise einen Kreisbogen mit Radius R realisiert, ist die Krümmung am Enden des Kurveneingangsmoduls 10 vorzugsweise ebenfalls 1/R.

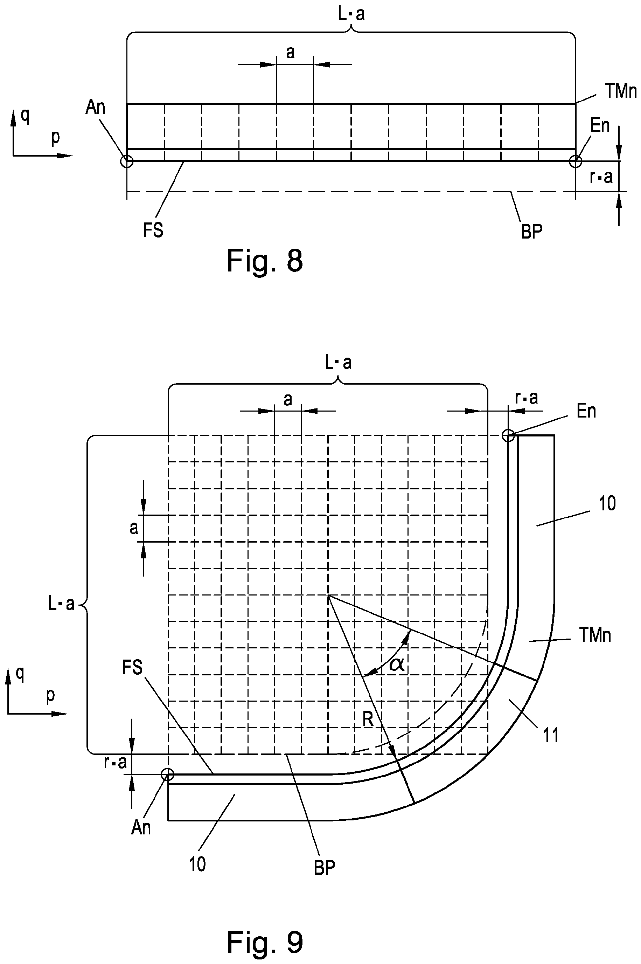

Sinnvollerweise ist auch eine gerade Transportstreckenbaugruppe TMn definiert (Fig.8), mit p≠0, q=0. Die Länge der geraden Transportstreckenbaugruppe TMn entspricht damit der Anzahl der Rasterlängen a zwischen Anfangspunkt An und Endpunkt En.

Jede Transportstreckenbaugruppe TMn könnte natürlich noch um ±90° oder 180° gedreht werden, was aber an den obigen allgemeinen Definitionen und insbesondere am (a x a)-Raster nichts ändert.

Die Transportstreckenbaugruppen TMn werden aber erfindungsgemäß darüber hinaus auch so angeordnet, dass auch der Bewegungspfad BP auf einem Rastereckpunkt des (a x a)-Rasters liegt. Dazu sind die Transportstreckenbaugruppen TMn in einem zweiseitigen Streckenabschnitt TA1, TA2 in Querrichtung y so angeordnet, dass sich der ergebende Bewegungspfad BP in Querrichtung y in einem Abstand (r·a) vom Anfangspunkt An, oder Endpunkt En, ergibt (siehe z.B. Fig.4 oder 5). Dabei ist r eine ungerade, ganze Zahl. In den in den Figuren 6 bis 8 gezeigten Ausgestaltungen ist beispielsweise r=1 gewählt.

Durch diese Festlegung kann sichergestellt werden, dass sich der Bewegungspfad BP auf einem festgelegten Raster ergibt, wie in Fig.3 dargestellt. Die Transportstrecke TS wird damit an einem Raster ausgerichtet, das durch den Bewegungspfad BP vorgegeben wird.

Um mit den Transportstreckenbaugruppen TMn diesen durch den Bewegungspfad BP vorgegebenen Raster aufbauen zu können, werden die Rasterkoordinaten p, q der Transportstreckenbaugruppen TMn vorzugsweise wie folgt gewählt.

Hierbei kann von der Länge (L·a) einer geraden Transportstreckenbaugruppe TM2 ausgegangen werden. Eine gerade Transportstreckenbaugruppen TMn mit Ursprung p=q=0 wäre dann beispielsweise definiert mit L≠0, q=0. Die Länge (L·a) definiert dann den (L·a) x (L·a) Raster des Bewegungspfades BP. Ein 90°-Bogen, wie in Fig.6 mit Ursprung p=q=0 im Anfangspunkt An dargestellt, wird dann mit Endpunkt En [(L-r) ·a] × [(L-r) ·a], mit p=q=(L-r), , gewählt und ein 180°-Bogen, wie in Fig.7 mit Ursprung p=q=0 im Anfangspunkt An dargestellt, folglich mit Endpunkt En 0 x [(L-2r) ·a], also mit p=0 und q=(L-2r). Die p, q-Rasterkoordinaten anderer möglicher Transportstreckenbaugruppen TMn lassen sich ausgehend von der Länge (L·a) in analoger Weise wählen, sodass sich der Bewegungspfad, der durch die Transportstreckenbaugruppe TMn ausgebildet wird, am (L·a) x (L·a) Raster ausrichten lässt.

Die derart gewählten Transportstreckenbaugruppen TMn können natürlich in beliebiger Orientierung verwendet werden, beispielsweise um 90°, 180° oder 270° gedreht, was an der obigen Definition aber nichts ändert.

In den obigen Beispielen ist die Führungsseite FS immer außenliegend, also im Bereich des größeren Krümmungsradius R vorgesehen. Die Führungsseite FS kann aber natürlich auch innenliegend vorgesehen sein, wie in Fig.9 am Beispiel eines 90°-Bogens dargestellt. Solche Transportstreckenbaugruppen TMn mit innenliegender Führungsseite FS können natürlich ebenfalls so gewählt werden, dass der entstehende Bewegungspfad BP am (L·a) x (L·a) Raster liegt. Folglich wird ein innenliegender 90°-Bogen mit Ursprung p=q=0 im Anfangspunkt An dann mit Endpunkt En [(L+r) ·a] x [(L+r) ·a], mit p=q=(L+r), gewählt. In analoger Weise ergibt sich ein innenliegender 180°-Bogen mit Anfangspunkt im Ursprung p=q=0 mit Endpunkt En 0 x [(L+2r) ·a], also mit p=0 und q=(L+2r). Andere innenliegende Transportstreckenbaugruppen TMn lassen sich in analoger Weise wählen, sodass der Bewegungspfad BP am (L·a) x (L·a) Raster liegt.

Um die Transportstrecke TS zu erstellen oder zu planen, reicht es aus, in das sich durch den Bewegungspfad BP ergebende oder festgelegte (L·a) x (L·a) Raster die benötigten Transportstreckenbaugruppen TMn einzusetzen um die gewünschten Transportpfade Bm auszubilden, was durch die Dimensionierung immer möglich ist. Dabei können natürlich auch innenliegende und außenliegende Transportstreckenbaugruppen TMn kombiniert werden. Das erleichtert das Erstellen einer Transportstrecke TS. Darüber hinaus kann eine Transportstrecke TS auf diese Weise auch sehr einfach um weitere Transportstreckenbaugruppen TMn ergänzt werden.

Wenn die Rasterlänge a beispielsweise mit 15mm festgelegt wird, dann kann beispielsweise L=44 gewählt werden, womit sich die Länge (L·a) einer geraden Transportstreckenbaugruppe TM2 mit 660mm ergibt. Das Raster des Bewegungspfades BP wäre dann mit 660mm x 660 mm festgelegt. Der Endpunkt En eines 90°-Bogen mit Anfangspunkt An bei p=q=0 hätte dann mit [(L-r) ·a] × [(L-r) ·a] und r=1 die Rasterkoordinaten 645mm × 645mm und der Endpunkt En eines 180°-Bogen die Rasterkoordinaten 0mm × 630mm.

Ganz besonders vorteilhaft kann als Rasterlänge a die Einbaubreite einer Antriebsspule 2 in Längsrichtung x an einer geraden Transportstreckenbaugruppe TM2 herangezogen werden, womit die Einbaubreite der Antriebsspule 2 das Raster bestimmt.

## Patentansprüche

1. Transportstrecke eines Langstatorlinearmotors (1) entlang der eine Transporteinheit (Tx) des Langstatorlinearmotors (1) in Längsrichtung (x) bewegbar ist, wobei die Transportstrecke (TS) durch zumindest zwei Transportstreckenbaugruppen (TMn) ausgebildet ist, die in Längsrichtung (x) nebeneinander angeordnet sind, wobei jede der zumindest zwei Transportstreckenbaugruppen (TMn) eine Führungsseite (FS) an einer in einer quer zu Längsrichtung (x) ausgerichteten Querrichtung (y) liegenden Seite der Transportstreckenbaugruppe (TMn) ausbildet und die Transporteinheit (Tx) an der Führungsseite (FS) geführt gelagert und in Längsrichtung (x) bewegbar angeordnet ist, und wobei die Transportstrecke (TS) mit einem zweiseitigen Streckenabschnitt mit Transportstreckenbaugruppen (TMn) an beiden Seiten ausgebildet ist und in einem zweiseitigen Streckenabschnitt die Führungsseiten (FS) von Transportstreckenbaugruppen (TMn) an den beiden Seiten einander zugewandt angeordnet sind, und wobei die zumindest zwei Transportstreckenbaugruppen (TMn) an der jeweiligen Führungsseite (FS) jeweils einen Anfangspunkt (An) und einen Endpunkt (En) aufweisen, der jeweils auf einem Rastereckpunkt (p·a) × (q·a) eines (a × a)-Rasters mit vorgegebener Rasterlänge a und Rasterkoordinaten p, q liegt, wobei p, q ganze Zahlen sind, und in einem zweiseitigen Streckenabschnitt in Querrichtung (y) zwischen zwei Transportstreckenbaugruppen (TMn) ein Zwischenraum (7) vorgesehen ist und die Transporteinheit (Tx) zumindest teilweise in diesem Zwischenraum (7) angeordnet ist, sich in Querrichtung (y) in der Mitte dieses Zwischenraumes (7) ein Bewegungspfad (BP) ausbildet, dem die Transporteinheit (Tx) bei Bewegung in Längsrichtung (x) durch die Führung an den Transportstreckenbaugruppen (TMn) folgt **dadurch gekennzeichnet dass** der Bewegungspfad (BP) durch die Anordnung der Transportstreckenbaugruppen (TMn) in Querrichtung (y) in einem Abstand von (r·a) vom Anfangspunkt (An) oder Endpunkt (En) entfernt angeordnet ist, wobei r eine ungerade, ganze Zahl ist.

2. Transportstrecke nach Anspruch 1, **dadurch gekennzeichnet, dass** die Transportstrecke (TS) mit einem einseitigen Streckenabschnitt mit Transportstreckenbaugruppen (TMn) an nur einer Seite ausgebildet ist.

3. Transportstrecke nach Anspruch 1 oder 2, **dadurch gekennzeichnet, dass** an den Transportstreckenbaugruppen (TMn) in Längsrichtung (x) eine Mehrzahl von Antriebsspulen (2) nebeneinander angeordnet sind, wobei die Einbaubreite einer Antriebsspule (2) in Längsrichtung (x) der Rasterlänge a entspricht.

4. Transportstrecke nach Anspruch 1 oder 2, **dadurch gekennzeichnet, dass** eine Transportstreckenbaugruppe (TMn) als gerade Transportstreckenbaugruppe (TMn) mit einer Länge (L·a), mit einer vorgegebenen ganzen, positiven Zahl L≠0, ausgeführt ist.

5. Transportstrecke nach Anspruch 1 oder 2, **dadurch gekennzeichnet, dass** eine Transportstreckenbaugruppe (TMn) als 90°-Bogen mit außenliegender Führungsseite (FS) ausgeführt ist, mit einem Anfangspunkt (An) oder Endpunkt (En) an den Rasterkoordinaten p=q=0 und dem Endpunkt (En) oder Anfangspunkt (An) an den Rasterkoordinaten p=(L-r) und q≠0, vorzugsweise q=(L-r).

6. Transportstrecke nach Anspruch 1 oder 2, **dadurch gekennzeichnet, dass** eine Transportstreckenbaugruppe (TMn) als 90°-Bogen mit innenliegender Führungsseite (FS) ausgeführt ist, mit einem Anfangspunkt (An) oder Endpunkt (En) an den Koordinaten p=q=0 und dem Endpunkt (En) oder Anfangspunkt (An) an den Koordinaten p=(L+r) und q≠0, vorzugsweise q=(L+r).

7. Transportstrecke nach Anspruch 1 oder 2, **dadurch gekennzeichnet, dass** eine Transportstreckenbaugruppe (TMn) als 180°-Bogen mit außenliegender Führungsseite (FS) ausgeführt ist, mit einem Anfangspunkt (An) oder Endpunkt (En) an den Rasterkoordinaten p=q=0 und dem Endpunkt (En) oder Anfangspunkt (An) an den Rasterkoordinaten p=0 und q=(L-2r).

8. Transportstrecke nach Anspruch 1 oder 2, **dadurch gekennzeichnet, dass** eine Transportstreckenbaugruppe (TMn) als 180°-Bogen mit innenliegender Führungsseite (FS) ausgeführt ist, mit einem Anfangspunkt (An) oder Endpunkt (En) an den Rasterkoordinaten p=q=0 und dem Endpunkt (En) oder Anfangspunkt (An) an den Rasterkoordinaten p=0 und q=(L+2r).

## Claims

1. Transport route of a long stator linear motor (1) along which a transport unit (Tx) of the long stator linear motor (1) is movable in longitudinal direction (x), wherein the transport route (TS) is formed by at least two transport route modules (TMn) that are arranged adjacent to each other in longitudinal direction (x), wherein each of the at least two transport route modules (TMn) forms a guiding side (FS) on a side of the transport route module (TMn) lying in a transverse direction (y) oriented transverse to the longitudinal direction (x) and the transport unit (Tx) is mounted in a guided manner on the guiding side (FS) and is arranged to be movable in longitudinal direction (x) on the guiding side (FS), and wherein the transport route (TS) is formed with a two-sided route section having transport route modules (TMn) on both sides and wherein in a two-sided route section the guiding sides (FS) of transport route modules (TMn) are arranged on the two sides facing each other and wherein the at least two transport route modules (TMn) each have on the respective guiding side (FS) a starting point (An) and an ending point (En), each of which is situated on a grid corner point (p·a) × (q·a) of a (a x a) grid having a predetermined grid length a and grid coordinates p, q, wherein p, q are whole numbers, and in a two-sided route section in transverse direction (y) between two transport route modules (TMn) an intermediate space (7) is provided and the transport unit (Tx) is arranged at least partially in this intermediate space (7), midway of this intermediate space (7) in transverse direction (y) a movement path (BP) is formed which the transport unit (Tx) follows when moving in longitudinal direction (x) by the guidance on the transport route modules (TMn), **characterized in that** the movement path (BP) is arranged by the arrangement of the transport route modules (TMn) in transverse direction (y) at a distance of (r·a) from the starting point (An) or ending point (En), wherein r is an odd, whole number.

2. Transport route according to claim 1, **characterized in that** the transport route (TS) is formed with a single-sided route section having transport route modules (TMn) on only one side.

3. Transport route according to claim 1 or 2, **characterized in that** on the transport route modules (TMn) a plurality of drive coils (2) are arranged adjacent to each other in longitudinal direction (x), wherein the installation width of a drive coil (2) in longitudinal direction (x) corresponds to the grid length a.

4. The transport route according to claim 1 or 3, **characterized in that** a transport route module (TMn) is designed as a straight transport route module (TMn) with a length (L·a) having a predetermined whole, positive number L≠0.

5. The transport route according to claim 1 or 3, **characterized in that** a transport route module (TMn) is designed as a 90° curve with an outward guiding side (FS), with a starting point (An) or ending point (En) at the grid coordinates p=q=0 and the ending point (En) or starting point (An) at the grid coordinates p=(L-r) and q≠0, preferably q=(L-r).

6. The transport route according to claim 1 or 3, **characterized in that** a transport route module (TMn) is designed as a 90° curve with an inward guiding side (FS), with a starting point (An) or ending point (En) at the coordinates p=q=0 and the ending point (En) or starting point (An) at the grid coordinates p=(L+r) and q≠0, preferably q=(L+r).

7. The transport route according to claim 1 or 3, **characterized in that** a transport route module (TMn) is designed as a 180° curve with an outward guiding side (FS), with a starting point (An) or ending point (En) at the grid coordinates p=q=0 and the ending point (En) or starting point (An) at the grid coordinates p=0 and q=(L-2r).

8. The transport route according to claim 1 or 3, **characterized in that** a transport route module (TMn) is designed as a 180° curve with an inward guiding side (FS), with a starting point (An) or ending point (En) at the grid coordinates p=q=0 and the ending point (En) or starting point (An) at the grid coordinates p=0 and q=(L+2r).

## Revendications

1. Trajet de transport d'un moteur linéaire à stator long (1) le long duquel une unité de transport (Tx) du moteur linéaire à stator long (1) peut être déplacée dans la direction longitudinale (x), le trajet de transport (TS) étant formé par au moins deux ensembles de trajets de transport (TMn) qui sont disposés l'un à côté de l'autre dans la direction longitudinale (x), chacun des au moins deux ensembles de trajets de transport (TMn) formant un côté de guidage (FS) sur un côté de l'ensemble de trajets de transport (TMn) se trouvant dans une direction transversale (y) orientée transversalement par rapport à la direction longitudinale (x) et l'unité de transport (Tx) étant montée guidée sur le côté de guidage (FS) et disposée mobile dans la direction longitudinale (x), et le trajet de transport (TS) étant formé par une section de trajet bilatérale comportant des ensembles de trajets de transport (TMn) des deux côtés et les côtés de guidage (FS) des ensembles de trajets de transport (TMn) étant disposés dans une section de trajet bilatérale en se faisant face sur les deux côtés, et les au moins deux ensembles de trajets de transport (TMn) présentant respectivement un point de départ (An) et un point final (En) sur le côté de guidage (FS) respectif, lesquels se situant respectivement à un sommet de quadrillage (p·a) × (q·a) d'un quadrillage (a × a) comportant une longueur de quadrillage a prédéfinie et des coordonnées de quadrillage p et q, p et q représentant des nombres entiers, et un espace intermédiaire (7) étant prévu dans une section de trajet bilatérale dans la direction transversale (y) entre deux ensembles de trajets de transport (TMn) et l'unité de transport (Tx) étant disposée au moins partiellement dans ledit espace intermédiaire (7), un chemin de déplacement (BP) étant formé au milieu dudit espace intermédiaire (7) dans la direction transversale (y), l'unité de transport (Tx) suivant ledit chemin de déplacement lorsqu'elle se déplace dans la direction longitudinale (x) grâce au guidage sur les ensembles de trajets de transport (TMn), **caractérisé en ce que** le chemin de déplacement (BP) est disposé à une distance de (r·a) par rapport au point de départ (An) ou au point final (En) par la disposition des ensembles de trajets de transport (TMn) dans la direction transversale (y), r représentant un nombre entier impair.

2. Trajet de transport selon la revendication 1, **caractérisé en ce que** le trajet de transport (TS) est conçu avec une section de trajet unilatérale comportant des ensembles de trajets de transport (TMn) sur un seul côté.

3. Trajet de transport selon la revendication 1 ou 2, **caractérisé en ce qu'**une pluralité de bobines d'entraînement (2) sont disposées les unes à côté des autres sur les ensembles de trajets de transport (TMn) dans la direction longitudinale (x), la largeur de montage d'une bobine d'entraînement (2) dans la direction longitudinale (x) correspondant à la longueur de quadrillage a.

4. Trajet de transport selon la revendication 1 ou 2, **caractérisé en ce qu'**un ensemble de trajets de transport (TMn) est conçu en tant qu'ensemble de trajets de transport (TMn) rectiligne comportant une longueur (L·a), avec un nombre entier positif prédéfini L ≠ 0.

5. Trajet de transport selon la revendication 1 ou 2, **caractérisé en ce qu'**un ensemble de trajets de transport (TMn) est conçu en tant que courbe à 90° comportant un côté de guidage (FS) extérieur, comportant un point de départ (An) ou un point final (En) aux coordonnées de quadrillage p = q = 0 et le point final (En) ou point de départ (An) aux coordonnées de quadrillage p = (L - r) et q ≠ 0, de préférence q = (L - r).

6. Trajet de transport selon la revendication 1 ou 2, **caractérisé en ce qu'**un ensemble de trajets de transport (TMn) est conçu en tant que courbe à 90° comportant un côté de guidage (FS) intérieur, comportant un point de départ (An) ou un point final (En) aux coordonnées p = q = 0 et le point final (En) ou point de départ (An) aux coordonnées p = (L + r) et q ≠ 0, de préférence q = (L + r).

7. Trajet de transport selon la revendication 1 ou 2, **caractérisé en ce qu'**un ensemble de trajets de transport (TMn) est conçu en tant que courbe à 180° comportant un côté de guidage (FS) extérieur, comportant un point de départ (An) ou un point final (En) aux coordonnées de quadrillage p = q = 0 et le point final (En) ou point de départ (An) aux coordonnées de quadrillage p = 0 et q = (L - 2r).

8. Trajet de transport selon la revendication 1 ou 2, **caractérisé en ce qu'**un ensemble de trajets de transport (TMn) est conçu en tant que courbe à 180° comportant un côté de guidage (FS) intérieur, comportant un point de départ (An) ou un point final (En) aux coordonnées de quadrillage p = q = 0 et le point final (En) ou point de départ (An) aux coordonnées de quadrillage p = 0 et q = (L + 2r).
